# EUROPÄISCHE PATENTANMELDUNG

(11) **EP 1 616 683 A2**
(43) Veröffentlichungstag der Anmeldung: **18.01.2006**
(21) Anmeldenummer: 05450120.0
(22) Anmeldetag: 14.07.2005
(51) Int. Cl.: B28C 7/16, B28C 9/00, B28C 7/04, E04F 21/12

(54) **Anlage zur herstellung und verarbeitung von nasspritz-mischgut**

(30) Priorität: 14.07.2004 AT 11912004
(71) Anmelder: Keil, Johann, 5771 Leogang (AT)
(72) Erfinder: Keil, Johann, 5771 Leogang (AT)
(74) Vertreter: Ellmeyer, Wolfgang

(57) **Zusammenfassung**

Anlage zur Herstellung und Verarbeitung von Naßspritz-Mischgut vor Ort, welche folgende Einheiten umfaßt
- zumindest zwei Vorratsbehälter (1, 101, 102) für Einzelkomponenten des Naßspritz-Mischgutes,
- eine Dosiereinheit für die Einzelkomponenten,
- eine Mischeinheit (4), in der die Einzelkomponenten aus den zumindest zwei Vorratsbehältern (1, 101, 102) zur Herstellung des Naßspritz-Mischgutes unter Zugabe von Wasser in situ mischbar sind,
- eine mit der Mischeinheit (4) verbundene Fördereinheit (8), über welche das Naßspritz-Mischgut zu einer mit der Fördereinheit (8) verbundenen Applikations-Einheit (10) förderbar ist, über welche das Naßspritz-Mischgut aufbringbar ist.

## Beschreibung

Die Erfindung betrifft eine Anlage zur Herstellung und Verarbeitung von Naßspritz-Mischgut vor Ort.

Spritzbeton und Spritzmörtel werden bereits seit vielen Jahren im Tunnelbau und bei der Sicherung von Hängen eingesetzt, wobei das Mischgut als Trockenspritzbeton (Trocken-Mischgut oder Feucht-Mischgut) oder als Naßspitzbeton (Naß-Mischgut) zur Anwendung gelangt.

Der große Vorteil des Trockenspritzbetons bwz. -mörtels besteht in seiner Lagerfähigkeit und den daraus resultierenden logistischen Vereinfachungen. Der Trockenspritzbeton wird angeliefert und vor Ort auf der Baustelle mit den gebräuchlichen Trockenspritzmaschinen oder Druckkesselgeräten verarbeitet. Das Mischgut wird trocken oder halbnaß pneumatisch gefördert und unter Zugabe von Wasser und gegebenenfalls von Beschleunigern an einer Spritzdüse aufgetragen. Nachteilig tritt dabei eine hohe Staubbelastung und ein hoher Rückprallverlust durch Material, das an der Auftrageoberfläche nicht haften bleibt, auf.

Im Gegensatz dazu fällt beim Naßspritzbeton oder Naßspritzmörtel kaum Staub an, da Bindemittel, Zuschlagstoffe und Wasser vorab vermischt werden, und die Durchmischung gegenüber dem Trockenverfahren homogener ist, wodurch eine höhere Betonqualität bewirkt wird. Allerdings ist bei der Applikation die Zugabe eines Beschleunigers erforderlich, um ein zeitgerechtes Abbinden zu gewährleisten. Eine mögliche Alternative wäre die Verwendung eines Spritzbindemittels, das sind schnell erstarrende Bindemittel, die ohne Zugabe von Zusatzmitteln wie Erstarrungsbeschleuniger das erforderliche Erstarren und die rasche Aushärtung des Spritzbetons hervorrufen.

Allerdings kam die Verwendung von Spritzbindemitteln im Naßspritzverfahren bisher aus gerätetechnischen und verarbeitungstechnischen Gründen nicht zur Anwendung.

Die Naßspritzbeton- oder Naßspritzmörtelmischung wird üblicherweise in einer Betonmischanlage vorbereitet und dann mit Hilfe von Transportfahrzeugen zur Einbaustelle gebracht, um dort verarbeitet zu werden. Dies ergibt einen hohen Aufwand, da eine eigene Mischanlage mit Personal vorhanden sein muß und ein ständiger Transport von Naßspritzmaterial zwischen Mischanlage und Einbaustelle zu erfolgen hat.

Aufgabe der Erfindung ist es daher, eine Anlage der eingangs genannten Art anzugeben, mit der eine Vereinfachung der Naßspritzbeton- oder Naßspritzmörtelherstellung erreicht werden kann.

Erfindungsgemäß wird dies dadurch erreicht, daß die Anlage folgende Einheiten umfaßt:
- zumindest zwei Vorratsbehälter für Einzelkomponenten,
- eine Dosiereinheit für die Einzelkomponenten des Naßspritz-Mischgutes,
- eine Mischeinheit, in der die Einzelkomponenten aus den zumindest zwei Vorratsbehältern zur Herstellung des Naßspritz-Mischgutes unter Zugabe von Wasser in situ mischbar sind,
- eine mit der Mischeinheit verbundene Fördereinheit, über welche das Naßspritz-Mischgut zu einer mit der Fördereinheit verbundenen Applikations-Einheit förderbar ist, über welche das Naßspritz-Mischgut aufbringbar ist.

Bedingt durch die Anordnung der einzelnen Einheiten direkt an der Stelle, an der das Naßspritz-Mischgut, z.B. Naßspritzbeton oder -mörtel aufzubringen ist, kann sowohl der Vorgang der Herstellung als auch der Vorgang der Verarbeitung unmittelbar vor Ort erfolgen. Es ist keine externe Mischanlage wie bisher erforderlich, sodaß ein Bedienpersonal für die Erzeugung und für die Verarbeitung des Naßspritz-Mischgutes verantwortlich ist und die Herstellung kontinuierlich parallel zur Verarbeitung des Mischgutes und ohne Befüllunterbrechungen erfolgen kann. Zusätzliches Mischanlagenpersonal fällt somit weg. Weiters können die ständigen Transportfahrten zwischen Mischanlage und Einbauort vermieden werden, da mit der erfindungsgemäßen Anlage z.B. bei Spritzbetonarbeiten im Tunnelvortrieb das Rohmaterial für einen gesamten Abschlag zugleich mit der erfindungsgemäßen Anlage antransportiert werden kann. Zugleich können die Vorteile des Trockenspritzbetons mit jenen des Naßspritzbetons durch Verwendung von Spritzbindemitteln ohne Beschleunigerzugabe bei gleichzeitiger Verarbeitung als Naßspritzbeton verbunden werden.

Eine Weiterbildung der Erfindung kann darin bestehen, daß die Anlage mobil oder semi-mobil ist, wodurch die Erzeugung des Naßspritzbetons oder -mörtels mit dem Vortrieb in einen Tunnel mitgeführt werden kann. Zu diesem Zweck kann die Anlage etwa auf einem Fahrzeug angeordnet sein, das entlang der Auftragstelle des Naßspritz-Mischgutes verfahrbar ist. Auch können nur Teile der Anlage verfahrbar ausgebildet sein.

Während der Herstellung wird das Mischungsverhältnis der Einzelkomponenten möglichst unverändert beibehalten, weshalb gemäß einem Ausführungsbeispiel der Erfindung die Dosier-Einheit aus mehreren Dosiereinrichtungen gebildet sein kann, wobei jedem Vorratsbehälter eine Dosiereinrichtung zugeordnet sein kann, über welche die in den Vorratsbehältern gelagertern Komponenten abgezogen und der Mischeinheit zugeführt werden.

Bevorzugt kann die Dosiereinrichtung durch einen Zellenraddosierer oder eine Dosierschnecke gebildet sein, weil dann das Verhältnis der Einzelkomponenten zueinander über die Drehzahl der Antriebswelle der Dosiereinrichtung einstellbar ist und auf diese Weise konstant gehalten werden kann. Dabei können zur Einstellung des Drehzahlverhältnisses der Dosiereinrichtungen Getriebe mit wechselbaren Zahnrädern, Kettenantrieben mit wechselbaren Kettenrädern oder stufenlos regelbare Stellgetriebe vorgesehen sein. Durch das einstellbare Drehzahlverhältnis der einzelnen Dosierer zueinander bleibt das Mischungsverhältnis der Einzelkomponenten über die variable Gesamtfördermenge konstant.

Die Dosiereinrichtungen, welche die Einzelkomponenten zuführen, sind mit der Mischeinheit verbunden, welche über einen Anmachwasserzulauf und gegebenenfalls über eine Zuführvorrichtung für chemische Additive, wie etwa Verflüssiger oder Verzögerer verfügt. Die Anmachwassermenge wird entsprechend der Durchflußmenge des Mischgutes automatisch geregelt. Ebenso kann die Zudosierung von Additiven durch Regelung erfolgen.

Eine weitere vorteilhafte Weiterbildung der Erfindung kann darin bestehen, daß die Mischeinheit durch einen Rohrmischer, Einwellenmischer oder Doppelwellendurchlaufmischer od. dgl. gebildet ist. Diese Arten von Mischern gewährleisten eine homogene Durchmischung von Einzelkomponenten und Wasser bei geringerer Verweildauer im Mischer.

Um ein Verlegen oder Verstopfen der Fördereinheit zu vermeiden und eine leichte Reinigung derselben zu ermöglichen, kann die Fördereinheit ein Schneckenförderer, eine Schneckenpumpe, eine Schlauchquetschpumpe od. dgl. sein.

Weiters kann die Applikations-Einheit durch eine Rotations-Teller- oder Federrad-Schleuder gebildet sein, die in ihrer Fördermenge hydraulisch verstellbar ist.

Eine andere Variante der Erfindung kann darin bestehen, daß die Applikations-Einheit eine Druckluft-Zuleitung für die pneumatische Aufbringung des Naßspritz-Mischgutes aufweist, die eine Druck- und Mengensteuerung ermöglicht, sodaß die Auswurfintensität entsprechend den Anforderungen eingestellt werden kann.

Auch die Applikations-Einheit kann einen Zuführeingang zur Zudosierung von chemischen Additiven, wie Beschleuniger od. dgl. aufweisen, deren Zufuhr über eine Chemieregelstrecke geregelt sein kann.

Es können beliebig viele Vorratsbehälter für Einzelkomponenten in der erfindungsgemäßen Anlage vorgesehen sein, wobei einer der zumindest zwei Vorratsbehälter mit Bindemittel gefüllt sein kann, das durch Zement oder durch ein Spritzbindemittel gebildet ist. Bei der Verarbeitung des Mischgutes mit Spritzbindemittel kann auf die Beimengung eines Beschleunigers verzichtet werden, was eine Kostenreduktion bei den Einzelkomponenten zur Folge hat.

Weitere zusätzliche Vorratsbehälter können mit anderen Komponenten, wie z.B. Flugasche gefüllt sein.

Die Erfindung betrifft auch ein Verfahren zur Herstellung und Verarbeitung von Spritzbeton.

Aufgabe ist es, eine Vorort-Herstellung und -Verarbeitung von Spritzbeton ohne Zuhilfenahme von Beschleunigerzugaben zu ermöglichen.

Erfindungsgemäß wird dies dadurch erreicht, daß der Spritzbeton unter Beigabe von Spritzbindemitteln nach dem Naßspritzbeton-Verfahren hergestellt und appliziert wird. Auf diese Weise werden die technischen und wirtschaftlichen Vorteile des Naß- und des Trockenspritzverfahrens vereint.

Weiters betrifft die Erfindung ein Verfahren zur Herstellung und Verarbeitung von Spritzbeton, wobei erfindungsgemäß der Spritzbeton unter Beigabe von Bindemitteln, z.B. Zement, und Erstarrungsbeschleuniger nach dem Naßspritzbeton-Verfahren hergestellt und appliziert wird.

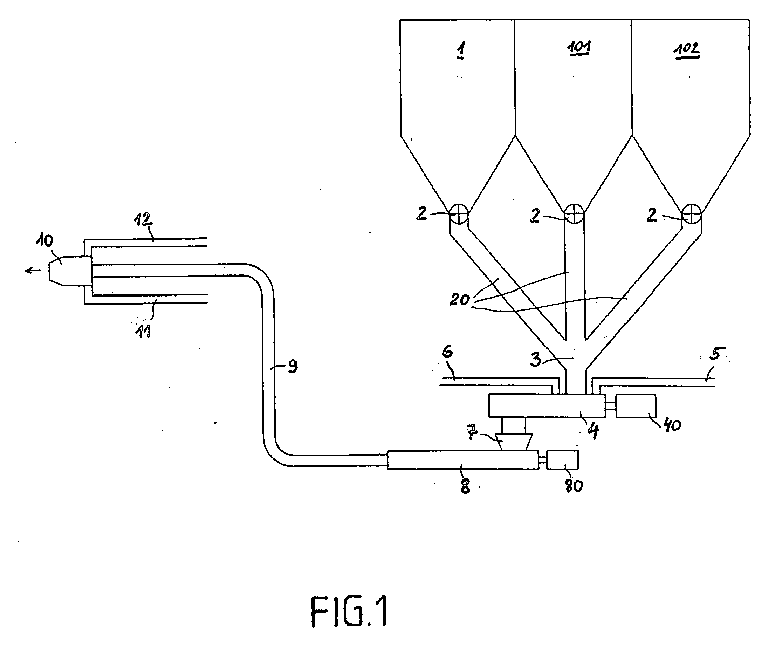

Nachstehend wird die Erfindung anhand der in Fig. 1 schematisch dargestellten Ausführungsform eingehend erläutert.

Fig.1 zeigt ein Ausführungsbeispiel einer erfindungsgemäßen Anlage zur Herstellung und Verarbeitung von Naßspritz-Mischgut, mit welcher sowohl die Herstellung einer Spritzbeton- oder Spritzmörtelmischung als auch das Aufbringen derselben vor Ort erfolgt.

In zumindest zwei, hier drei Vorratsbehältern 1, 101, 102 sind Einzelkomponenten für die Herstellung des Spritzbetons oder Spritzmörtels eingefüllt. Als Vorratsbehälter 1, 101, 102 können Vorratssilos beliebiger Geometrie Anwendung finden, wobei die Einzelkomponenten im trockenen Zustand vorliegen und daher eine länger dauernde Einlagerung keine Probleme bereitet.

Im gezeigten Ausführungsbeispiel befindet sich im Vorratsbehälter 1 ein Bindemittel, z.B. Zement oder ein Spritzbindemittel, im Vorratsbehälter 101 ein Zuschlagstoff und im Vorratsbehälter 102 eine weitere Komponente. Entsprechend den Anforderungen an den Beton kann die Anzahl und die Art der Einzelkomponenten variiert werden, z.B. kann die Flugasche weggelassen werden. Die in den Vorratsbehältern 1, 101, 102 gelagerten Einzelkomponenten werden über eine Dosiereinheit, die in Form von Dosiereinrichtungen 2, die jedem Vorratsbehälter 1, 101, 102 zugeordnet sind, vorliegen, abgezogen.

Die Dosiereinrichtungen 2 können beispielsweise als Zellenraddosierer, Dosierschnecken oder Oszillomatdosierer ausgebildet sein und fördern die Einzelkomponenten aus den Vorratsbehältern 1, 101, 102 einer Mischeinheit 4 zu, in der die Einzelkomponenten aus den Vorratsbehältern 1, 101, 102 zur Herstellung des Naßspritz-Mischgutes in situ unter Zugabe von Wasser mischbar sind.

Bei den Dosierschnecken und Zahraddosierern ist das Verhältnis der Einzelkomponenten zueinander über die Drehzahl der nicht dargestellten Antriebswellen der Dosiereinrichtungen 2 einstellbar, wobei zur Einstellung des Drehzahlverhältnisses der Dosiereinrichtungen 2 Getriebe mit wechselbaren Zahnrädern, Kettenantrieben mit wechselbaren Kettenrädern oder stufenlos regelbare Stellgetriebe vorgesehen sind. Dies kann auch mit Hilfe von äquivalenten mechanischen Mitteln geschehen. Die Gesamtfördermenge wird über einen alle Dosiereinrichtungen 2 antreibenden Hauptantrieb, der in Fig.1 nicht gezeigt ist, geregelt. Durch das einstellbare Drehzahlverhältnis der einzelnen Dosiereinrichtungen 2 zueinander bleibt das Mischungsverhältnis der Einzelkomponenten über die variable Gesamtfördermenge konstant.

Die Dosiereinrichtungen 2 sind über Zuleitungen 20, die in einen gemeinsamen Zulauf 3 münden, mit der von einer Misch-Antriebseinheit 40 angetriebenen Mischeinheit 4 verbunden, welche über einen Anmachwasserzulauf 5 und über eine Zuführvorrichtung 6 für chemische Additive verfügt. Die Regelung der Anmachwasserzugabe erfolgt über eine Wasserregelstrecke (nicht dargestellt) mit einem Durchflußmesser sowie einem Magnet- und Regelventil in Abhängigkeit von der Roh-Mischgutaufgabemenge. Als Mischeinheit 4 kann z.B. ein Rohrmischer, ein Einwellenmischer oder ein Doppelwellendurchlaufmischer Verwendung finden.

Entsprechend den Betonanforderungen besteht die Möglichkeit, chemische Additive, wie z.B. Verflüssiger, Verzögerer od. dgl. über die Zuführvorrichtung 6 zuzudosieren, wobei die zugeführte Menge über eine Chemieregelstrecke (nicht dargestellt) mit einem Durchflußmesser sowie einem Magnet- und Regelventil wiederum in Abhängigkeit von der Roh-Mischgutaufgabemenge einstellbar ist.

Der fertiggemischte Beton oder Mörtel wird am Ausgang der Mischeinheit 4 einer mit dieser verbundenen Fördereinheit 8, die über eine Antriebseinheit 80 angetrieben wird, aufgegeben, über welche das Naßspritz-Mischgut zu einer mit der Fördereinheit 8 über eine Schlauch- oder Rohrleitung 9 verbundenen Applikations-Einheit 10 gefördert wird, mittels der das Naßspritz-Mischgut z.B. auf eine Tunnelwand aufbringbar ist.

Bevorzugt ist die Fördereinheit 8 durch einen Schneckenförderer, eine Schneckenpumpe, eine Schlauchquetschpumpe od. dgl. gebildet. Der Schneckenförderer hoher Drehzahl mit progressiver Wendelsteigung und/oder degressivem Schneckendurchmesser, die Schneckenpumpe oder die Schlauchquetschpumpe drücken den Beton oder den Mörtel möglichst rasch bei kurzer Verweildauer über die Schlauch- oder Rohrleitung 9 zur Applikations-Einheit 10. Es kann auf diese Weise die Förderung eines Naßspritz-Mischgutes, z.B. Naßspritzbeton- oder -mörtel erfolgen, dem nur ein Spritzbindemittel ohne Beschleuniger beigemischt ist.

Die Fördereinheit 8 ist zur raschen und kontinuierlichen Verarbeitung des Spritzbetons oder -mörtels auf eine höhere Durchsatzleistung als die Mischeinheit 4 dimensioniert.

Schließlich wird das über die Schlauch- oder Rohrleitung 9 geförderte Naßspritz-Mischgut der Applikations-Einheit 10 zugeführt, mittels der das Mischgut ausgeworfen wird. Die Applikations-Einheit 10 kann durch eine Rotations-Teller- oder Federrad-Schleuder od. dgl. gebildet sein oder es kann eine pneumatische Druckluft-Zuleitung 11 für die Aufbringung des Naßspritz-Mischgutes mit Druckluft vorgesehen sein. Bei mechanischer Förderung erfolgt der Antrieb der Applikations-Einheit 10 z.B. hydraulisch stufenlos verstellbar und bei pneumatischer Förderung druck- und mengengesteuert, sodaß die Wurfintensität den jeweiligen Anforderungen, z.B. wenn die Applikation über Kopf, senkrecht nach unten oder nach oben erfolgen soll, angepaßt werden kann.

Weiters weist die Applikations-Einheit 10 einen Zuführeingang 12 zur Zudosierung von chemischen Additiven, z.B. Beschleuniger auf, sodaß diese über eine Chemieregelstrecke mit einem Durchflußmesser, einem Magnet- und Regelventil in Abhängigkeit von der Naßspritz-Mischgutmenge zudosiert werden können.

Die erfindungsgemäße Anlage kann sowohl mobil auf einem Fahrzeug oder semi-mobil, d.h. nur ein Teil der Komponenten gegenüber dem Rest der Anlage verfahrbar, ausgebildet sein, sodaß keine Transportfahrzeuge von einer externen Mischanlage zur Baustelle erforderlich sind.

## Patentansprüche

1. Anlage zur Herstellung und Verarbeitung von Naßspritz-Mischgut vor Ort, welche folgende Einheiten umfaßt
- zumindest zwei Vorratsbehälter (1, 101, 102) für Einzelkomponenten des Naßspritz-Mischgutes,
- eine Dosiereinheit für die Einzelkomponenten,
- eine Mischeinheit (4), in der die Einzelkomponenten aus den zumindest zwei Vorratsbehältern (1, 101, 102) zur Herstellung des Naßspritz-Mischgutes unter Zugabe von Wasser in situ mischbar sind,
- eine mit der Mischeinheit (4) verbundene Fördereinheit (8), über welche das Naßspritz-Mischgut zu einer mit der Fördereinheit (8) verbundenen Applikations-Einheit (10) förderbar ist, über welche das Naßspritz-Mischgut aufbringbar ist.

2. Anlage nach Anspruch 1, **dadurch gekennzeichnet, daß** die Anlage mobil oder semi-mobil ist.

3. Anlage nach Anspruch 1 oder 2, **dadurch gekennzeichnet, daß** die Fördereinheit ein Schneckenförderer, eine Schneckenpumpe, eine Schlauchquetschpumpe od. dgl. ist.

4. Anlage nach Anspruch 1, 2 oder 3, **dadurch gekennzeichnet, daß** das Naßspritz-Mischgut Spritzbeton oder -Mörtel ist.

5. Anlage nach einem der Ansprüche 1 bis 4, **dadurch gekennzeichnet, daß** die Dosier-Einheit aus mehreren Dosiereinrichtungen (2) gebildet ist, wobei jedem Vorratsbehälter (1, 101, 102) eine Dosiereinrichtung (2) zugeordnet ist, über welche die in den Vorratsbehältern (1) gelagerten Komponenten abziehbar sind.

6. Anlage nach Anspruch 5, **dadurch gekennzeichnet, daß** die Dosiereinrichtung (2) ein Zellenraddosierer, eine Dosierschnecke oder ein Oszillomatdosierer ist.

7. Anlage nach Anspruch 5 oder 6, **dadurch gekennzeichnet, daß** das Verhältnis der Einzelkomponenten zueinander über die Drehzahl der Antriebswelle der Dosiereinrichtung (2) einstellbar ist.

8. Anlage nach Anspruch 7, **dadurch gekennzeichnet, daß** zur Einstellung des Drehzahlverhältnisses der Dosiereinrichtungen (2) Getriebe mit wechselbaren Zahnrädern, Kettenantrieben mit wechselbaren Kettenrädern oder stufenlos regelbare Stellgetriebe vorgesehen sind.

9. Anlage nach einem der vorhergehenden Ansprüche, **dadurch gekennzeichnet, daß** die Dosiereinrichtungen (2) mit der Mischeinheit (4) verbunden sind, welche über einen Anmachwasserzulauf (5) und gegebenenfalls über eine Zuführvorrichtung (6) für chemische Additive verfügt.

10. Anlage nach einem der vorhergehenden Ansprüche, **dadurch gekennzeichnet, daß** die Mischeinheit (4) durch einen Rohrmischer, Einwellenmischer oder Doppelwellendurchlaufmischer gebildet ist.

11. Anlage nach einem der vorhergehenden Ansprüche, **dadurch gekennzeichnet, daß** die Applikations-Einheit (10) durch eine Rotations-Teller- oder Federrad-Schleuder gebildet ist.

12. Anlage nach einem der Ansprüche 1 bis 10, **dadurch gekennzeichnet, daß** die Applikations-Einheit (10) eine Druckluft-Zuleitung (11) für die pneumatische Druckaufbringung des Naßspritz-Mischgutes aufweist.

13. Anlage nach einem der vorhergehenden Ansprüche, **dadurch gekennzeichnet, daß** die Applikations-Einheit (10) einen Zuführeingang (12) zur Zudosierung von chemischen Additiven aufweist.

14. Anlage nach einem der vorhergehenden Ansprüche, **dadurch gekennzeichnet, daß** einer der zumindest zwei Vorratsbehälter (1, 101, 102) mit Bindemittel gefüllt ist.

15. Anlage nach Anspruch 14, **dadurch gekennzeichnet, daß** das Bindemittel durch Zement oder durch ein Spritzbindemittel gebildet ist.

16. Verfahren zur Herstellung und Verarbeitung von Spritzbeton, **dadurch gekennzeichnet, daß** der Spritzbeton unter Beigabe von Spritzbindemitteln nach dem Naßspritzbeton-Verfahren hergestellt und appliziert wird.

17. Verfahren zur Herstellung und Verarbeitung von Spritzbeton, **dadurch gekennzeichnet, daß** der Spritzbeton unter Beigabe von Bindemitteln, z.B. Zement, und Erstarrungsbeschleuniger nach dem Naßspritzbeton-Verfahren hergestellt und appliziert wird.
